# EUROPÄISCHE PATENTANMELDUNG

(11) **EP 4 357 056 A1**
(43) Veröffentlichungstag der Anmeldung: **24.04.2024**
(21) Anmeldenummer: 23202477.8
(22) Anmeldetag: 09.10.2023
(51) Int. Cl.: B23B 31/30, B23B 31/40

(54) **DEHNSPANNEINRICHTUNG UND VERFAHREN ZUR HERSTELLUNG EINER SOLCHEN DEHNSPANNEINRICHTUNG**

(30) Priorität: 19.10.2022 DE 102022127525
(71) Anmelder: SCHUNK SE & Co. KG Spanntechnik Greiftechnik Automatisierungstechnik, 74348 Lauffen am Neckar (DE)
(72) Erfinder: Cantz, Nico, 74394 Hessigheim (DE)
(74) Vertreter: Paul & Albrecht Patentanwälte PartG mbB

(57) **Zusammenfassung**

Die vorliegende Erfindung betrifft eine Dehnspanneinrichtung (1) zum Fixieren eines Bauteils, insbesondere eines Werkstücks oder eines Werkzeugs, mit
einem eine Längsachse (X) definierenden Grundkörper (2) und
einem Spannelement (5), welches eine Aufnahme mit einer nach innen weisenden oder einer nach außen weisenden Spannfläche (16) zum kraftschlüssigen Spannen des Bauteils aufweist,
wobei das Spannelement (5) mittels eines generativen Fertigungsverfahrens, insbesondere mittels selektiven Laserschmelzens, gefertigt ist und mit dem Grundkörper (2) durch mindestens eine stoffschlüssige Fügeverbindung, insbesondere durch mindestens eine Lötverbindung (6, 7), bevorzugt durch mindestens eine Hochtemperatur-Lötverbindung, oder durch mindestens eine Schweißverbindung, insbesondere durch mindestens eine Reibschweißverbindung, oder durch mindestens eine Klebeverbindung verbunden ist, wobei, bevorzugt, das Spannelement (5) mit dem Grundkörper (2) durch zwei axial versetzt zueinander angeordnete Fugenverbindungen verbunden ist und die beiden Fugenverbindungen im hinteren Endabschnitt auf zwei benachbarten Stufen ausgebildet sind.

## Beschreibung

Die vorliegende Erfindung betrifft eine Dehnspanneinrichtung zum Fixieren eines Bauteils, insbesondere eines Werkstücks oder eines Werkzeugs an einer Werkzeugmaschine.

Dehnspanneinrichtungen sind in unterschiedlichen Ausführungsformen bekannt und werden in erster Linie eingesetzt, um einen Werkzeugschaft wie beispielsweise einen Bohrer- oder Fräserschaft in der Arbeitsspindel einer entsprechenden Werkzeugmaschine zu fixieren. Üblicherweise besitzen solche Dehnspanneinrichtungen eine Aufnahme mit einer radial nach innen oder nach außen weisenden Spannfläche zum kraftschlüssigen Spannen des Werkzeugs. Innerhalb oder außerhalb der Spannfläche ist zumeist eine Druckkammer, insbesondere eine ringförmig umlaufende Druckkammer ausgebildet. Zwischen der Druckkammer und der Spannfläche ist dabei eine dünne Wandung ausgebildet, die durch eine Erhöhung des Drucks in der Druckkammer elastisch nach innen oder nach außen verformbar ist, um eine Spannwirkung zu erzielen.

Prinzipiell unterscheidet man zwei Arten von Dehnspanneinrichtungen, nämlich zum einen sogenannte Spanndorne, bei denen die Spannfläche radial nach außen weist und sich die dünne Wandung bei Druckbeaufschlagung der Druckkammer radial nach außen aufweitet, um ein aufgesetztes Werkstück oder Werkzeug kraftschlüssig von innen zu spannen. Zum anderen können Dehnspanneinrichtungen als Spannfutter ausgebildet sein, die eine Aufnahme mit einer nach innen weisenden Spannfläche besitzen, so dass ein in die Aufnahme eingesetzter Werkzeugschaft durch eine radiale Verformung der dünnen Wandung nach innen kraftschlüssig von außen gespannt werden kann.

Zur Herstellung einer solchen Dehnspanneinrichtung kann ein Grundkörper bereitgestellt werden, in den von vorne eine Dehnbüchse aufgesetzt wird, so dass zwischen der Dehnbüchse und dem Grundkörper die Druckkammer ausgebildet ist. Die Dehnbüchse wird dabei mit dem Grundkörper in einem vorderen axialen Endbereich und einem hinteren axialen Endbereich verlötet, um die Druckkammer zwischen dem Grundkörper und der Dehnbüchse abzudichten. Eine solche Ausgestaltung einer Dehnspanneinrichtung ist beispielsweise aus DE 10 2010 005 844 A1 vorbekannt.

Ein alternativer Herstellungsweg besteht darin, dass ein hinterer Endbereich einer Dehnspanneinrichtung mit einem konventionellen Fertigungsverfahren, beispielsweise durch spanende Bearbeitung aus Vollmaterial hergestellt wird und in einem zweiten Schritt der vordere Endbereich, welcher die geometrisch komplizierte Druckkammeranordnung enthält, generativ auf den bereits konventionell hergestellten hinteren Abschnitt direkt aufgedruckt wird. Dazu wird der konventionell gefertigte hintere Abschnitt in eine entsprechende Maschine, beispielsweise in einen 3D-Drucker, eingesetzt, so dass der vordere Abschnitt mit der Druckkammeranordnung direkt auf diesem erzeugt wird.

Eine solche Vorgehensweise hat sich zwar grundsätzlich bewährt, jedoch wird zu teilen als nachteilig angesehen, dass üblicherweise der vordere, generativ erzeugte Abschnitt deutlich schlanker ausgebildet ist als der konventionell gefertigte hintere Abschnitt, so dass nur wenige hintere Abschnitte in eine Maschine zur generativen Fertigung eingesetzt werden können und damit die Maschinenauslastung nicht optimal ist.

Aufgabe der vorliegenden Erfindung ist es daher, eine alternative Dehnspanneinrichtung und ein alternatives Verfahren zur Herstellung einer solchen Dehnspanneinrichtung bereit zu stellen, welche insbesondere die vorgenannten Nachteile vermeiden.

Diese Aufgabe ist durch eine Dehnspanneinrichtung zum Fixieren eines Bauteils, insbesondere eines Werkstücks oder eines Werkzeugs an einer Werkzeugmaschine, mit einem eine Längsachse definierenden Grundkörper und einem Spannelement, welches eine Aufnahme mit einer nach innen weisenden oder einer nach außen weisenden Spannfläche zum kraftschlüssigen Spannen des Bauteils aufweist, dadurch gelöst, dass das Spannelement mittels eines generativen Fertigungsverfahrens, insbesondere mittels selektiven Laserschmelzens, gefertigt ist und mit dem Grundkörper durch mindestens eine stoffschlüssige Fügeverbindung, insbesondere durch mindestens eine Lötverbindung, bevorzugt durch mindestens eine Hochtemperatur-Lötverbindung, oder durch mindestens eine Schweißverbindung, bevorzugt durch mindestens eine Reibschweißverbindung, oder durch eine Klebeverbindung verbunden ist, wobei, bevorzugt, das Spannelement (5) mit dem Grundkörper (2) durch zwei axial versetzt zueinander angeordnete Fugenverbindungen verbunden ist und die beiden Fugenverbindungen im hinteren Endabschnitt auf zwei benachbarten Stufen ausgebildet sind.

Die der Erfindung zugrundeliegende Aufgabe ist ferner beim Verfahren zur Herstellung einer solchen Dehnspanneinrichtung gelöst, welches die folgenden Schritte umfasst:
- Bereitstellen eines Grundkörpers (2), welcher eine Längsachse (X) definiert;
- Generatives Erzeugen eines Spannelements (5), insbesondere mittels eines direkten oder eines indirekten additiven Fertigungsverfahrens, bevorzugt mittels selektiven Laserschmelzens, wobei insbesondere der hintere Endabschnitt des Spannelements (6) abgestuft ausgebildet ist;
- Aufsetzen des Spannelements (5) auf den Grundkörper (2) von vorne oder Einsetzen des Spannelements (5) in den Grundkörper (2) von vorne;
- stoffschlüssiges Fügen des Spannelements (5) mit dem Grundkörper (2), insbesondere durch Löten, bevorzugt durch Hochtemperatur- Löten, oder durch Schweißen, insbesondere durch Reibschwei-ßen, oder durch Kleben, wobei - insbesondere - zwei axial versetzt zueinander angeordnete stoffschlüssige Fugenverbindungen entstehen, die im hinteren Endabschnitt des Spannelements (5) auf zwei benachbarten Stufen ausgebildet sind.

Der Erfindung liegt damit die grundsätzliche Überlegung zugrunde, ein als separates Bauteil gefertigtes Spannelement mit dem Grundkörper stoffschlüssig zu verbinden. Dabei ist das Spannelement mittels eines generativen Fertigungsverfahrens hergestellt. Generative Fertigungsverfahren werden auch als additive Fertigungsverfahren bezeichnet. Beispielsweise kann als generatives Fertigungsverfahren das selektive Laserschmelzen eingesetzt werden. Dabei wird schichtweise Metallpulver aufgebracht und in den Bereichen, in denen ein Bauteil erzeugt werden soll, durch einen Laserstrahl aufgeschmolzen, so dass ein herzustellendes Bauteil, hier das Spannelement, schichtweise erzeugt wird. Ein alternatives Verfahren ist das selektive Elektronenstrahl-Schmelzen, welches prinzipiell ähnlich funktioniert, wobei jedoch anstelle eines Laserstrahls ein Elektronenstrahl verwendet wird. Andere beispielhafte generative oder additive Fertigungsverfahren sind das Laserauftragsschweißen, das sogenannte Wire Arc/Plasma Arc Engery Deposition-Verfahren, bei dem ein Lichtbogen oder ein Plasma-Lichtbogen zum Auftragsschweißen verwendet wird, das sogenannte Wire Feed Electron Deposition-Verfahren, bei dem zum Auftragsschweißen ein Elektronenstrahl verwendet wird. Ein weiteres mögliches additives Fertigungsverfahren ist das Metall Binder Verfahren, bei welchem Metall pulverförmig aufgebracht wird und ein in der Regel flüssiges Bindemittel aufgetragen wird, durch welches selektiv die verschiedenen Metallschichten miteinander verbunden werden. Das Metall Binder Verfahren kann ein Sintern beinhalten. Das additive Fertigungsverfahren kann auch das sogenannte Fused Deposition Modeling, auch Schmelzschichtung genannt, beinhalten, bei welchem ein Werkstück schichtweise aus einem geschmolzenen Werkstoff, beispielsweise aus einem Kunststoff oder einem metallischen Werkstoff, aufgebaut wird. Zweckmäßigerweise kann als Ausgangsmaterial ein Filament aus dem jeweiligen Material verwendet werden. Auch dieses Verfahren kann ein Sintern umfassen. Möglich ist auch, dass als additives Fertigungsverfahren Lithography- based metall manufacturing (LMM) eingesetzt wird. Hierbei wird ein photosensitives Bindemittel verwendet, um Metallpulver insbesondere schichtweise miteinander zu verbinden. Als additives Fertigungsverfahren kann auch ein Mikrogussverfahren zum Einsatz kommen. Dabei kann bevorzugt ein Werkzeug oder eine verlorene Form additiv gefertigt werden und anschließend das herzustellende Bauteil in dieser Form gegossen werden. Hierbei handelt es sich somit um ein indirektes additives Fertigungsverfahren, da nicht das herzustellende Bauteil additiv gefertigt wird, sondern ein Werkzeug bzw. eine Form zur anschließenden Herstellung des Bauteils. Demgegenüber sind direkte additive Fertigungsverfahren dadurch gekennzeichnet, dass das herzustellende Bauteil, vorliegend das Spannelement, direkt generativ erzeugt werden.

Möglich ist auch, dass das Spannelement zunächst generativ erzeugt wird und anschließend spanend nachbearbeitet wird, bevor es mit dem Grundkörper gefügt wird. Dies kann beispielsweise erforderlich sein, wenn zusätzliche Bohrungen eingebracht oder Gewinde auf dem Spannelement erzeugt werden sollen.

Bei der erfindungsgemäßen Dehnspanneinrichtung ist somit vorgesehen, einen Grundkörper und ein Spannelement zunächst als separate Bauteile zu fertigen und anschließend in einem separaten Schritt stoffschlüssig zu fügen. Unter einer stoffschlüssigen Fügeverbindung ist damit das Fügen von zwei bereits vorgefertigten Bauteilen oder Komponenten, vorliegend vom Grundkörper und dem Spannelement, zu verstehen. Dadurch kann beispielsweise der Grundkörper mit konventionellen zerspanenden Fertigungsverfahren aus einem Vollmaterial, bzw. aus einem urgeformten, beispielsweise gegossenen Werkstück, zerspanend gefertigt werden, wohingegen das Spannelement, welches eine komplexe Geometrie aufweisen kann, generativ, insbesondere mittels 3D-Druck, bevorzugt mittels selektiven Laserschmelzens gefertigt sein kann.

Generell ist gegenüber konventionellen zerspanenden Fertigungsverfahren ein generatives Fertigungsverfahren ein eher langsameres Verfahren. Das bedeutet, dass deutlich mehr Zeit erforderlich ist, um ein Werkstück zu fertigen. Durch das separate Fertigen des Grundkörpers und des Spannelements kann trotz der komplexen Geometrie des Spannelements eine solche Dehnspanneinrichtung effizient gefertigt werden, da lediglich das Spannelement generativ gefertigt wird und der Grundkörper besonders effizient auf konventionelle Weise hergestellt wird.

Durch das anschließende Verbinden mittels mindestens einer stoffschlüssigen Fügeverbindung ist es auch nicht notwendig, das Spannelement direkt auf dem bereits gefertigten Grundkörper generativ zu erzeugen. Die Herstellung kann unabhängig voneinander stattfinden, was zu einer günstigeren Maschinenauslastung beim Erzeugen des Spannelements führt.

In konkreter Ausgestaltung kann das Spannelement einen vorderen axialen Endbereich der Dehnspanneinrichtung bilden und/oder von vorne auf den Grundkörper aufgesetzt oder in diesen eingesetzt sein. Es können ferner Anschlagmittel vorgesehen sein, um das Spannelement beim Aufsetzen auf bzw. beim Einsetzen in den Grundkörper eindeutig in axialer Richtung zu positionieren. Diese können eine am Grundkörper ausgebildete Anschlagfläche, welche sich bevorzugt senkrecht zur Längsachse erstreckt, und eine korrespondierende, am Spannelement ausgebildete Gegenfläche umfassen, die an der Anschlagfläche anliegt.

Bevorzugt umfasst die stoffschlüssige Fügeverbindung des Spannelements mit dem Grundkörper zwei axial versetzt zueinander angeordnete stoffschlüssige Fügeverbindungen, insbesondere Lötverbindungen oder Schweißverbindungen, insbesondere Reibschweißverbindungen, oder Klebeverbindungen. Auf diese Weise wird eine hohe Kippsteifigkeit des Spannelements und des Grundkörpers erreicht.

Jede Lötverbindung umfasst bevorzugt eine am Spannelement oder am Grundkörper ausgebildete, nach außen weisende innere Lötfläche und eine an dem anderen der beiden Teile ausgebildete, nach innen weisende äußere Lötfläche, wobei die äußere und die innere Lötfläche bevorzugt ringförmig umlaufend derart ausgebildet sind, dass zwischen der äußeren und der inneren Lötfläche ein ringförmig umlaufender Lötspalt existiert. Auf diese Weise können ringförmig umlaufende Lötverbindungen zwischen dem Spannelement und dem Grundkörper hergestellt werden. Insbesondere können diese dadurch gleichzeitig eine Dichtwirkung entfalten.

In konkreter Ausgestaltung kann jede Lötverbindung eine am Spannelement ausgebildete, nach außen weisende Lötfläche aufweisen und eine korrespondierende, am Grundkörper ausgebildete nach innen weisende Lötfläche. Demzufolge ist vorgesehen, dass der Grundkörper das Spannelement im Bereich der Lötverbindungen von außen umgibt. Mit anderen Worten ist das Spannelement in den Grundkörper eingesetzt.

In weiterer Ausgestaltung können die Lötflächen eine kreiszylindrische Form aufweisen. Alternativ können die beiden Lötflächen der Lötverbindungen durch ein Innen- und ein Außengewinde gebildet werden, so dass die Lötverbindung zwischen dem Außengewinde und dem Innengewinde ausgebildet ist. Dieser Ausgestaltung liegt die Überlegung zugrunde, zusätzlich zu der stoffschlüssigen Verbindung zwischen Spannelement und Grundkörper auch noch eine formschlüssige Verbindung durch die miteinander in Eingriff stehenden Gewinde vorzusehen. Der Gewindespalt, welcher durch das Gewindespiel zwischen Außen- und Innengewinde entsteht, wird dabei mit Lötmaterial gefüllt, so dass im Bereich der Gewindeverbindung eine Lötverbindung entsteht.

Wenn die Lötflächen durch ein Innen- bzw. ein Außengewinde gebildet werden, ist es zur Montage erforderlich, das Spannelement in den Grundkörper einzuschrauben oder auf diesen aufzuschrauben. Dazu müssen die zu den beiden Lötverbindungen gehörenden Gewinde, die am Spannelement bzw. am Grundkörper ausgebildet sind, die gleiche Gewindesteigung und zueinander korrespondierende Gewindeanfänge aufweisen, um ein Aufschrauben oder Einschrauben des Spannelements auf bzw. in den Grundkörper zu ermöglichen.

Konkret können die Innen- und/oder Außengewinde als metrische Regelgewinde oder als metrische Feingewinde oder als Withworth-Gewinde oder als Rohrgewinde oder als Trapezgewinde oder als Sägengewinde ausgebildet sein. Beispielsweise können die metrischen Regelgewinde oder Feingewinde gemäß der DIN 13-1:1999-11 oder der DIN 13-2:1999-11 ausgebildet sein. Rohrgewinde sind beispielsweise in der ISO 228-1:1994-12 oder gemäß der DIN 2999:1983-07 genormt. Ein Trapezgewinde kann insbesondere nach DIN 103-1:1977-04 ausgebildet sein. Ein Sägengewinde ist in der Norm DIN 513:1985-04 genormt.

Dabei sind die Innen- und/oder Außengewinde bevorzugt als zylindrische Gewinde ausgebildet. Alternativ ist es auch denkbar, dass mindestens ein Gewinde als konisches oder kegeliges Gewinde ausgebildet ist. Durch die Kombination eines konischen Gewindes, beispielsweise einem konischen Außengewinde, mit einem zylindrischen Gewinde, beispielsweise einem zylindrischen Innengewinde, kann gleichzeitig eine Dichtwirkung erzielt werden.

In weiterer Ausgestaltung können die beiden Lötverbindungen auf unterschiedlichen Durchmessern um die Längsachse angeordnet sein, konkret kann der Durchmesser der größeren der beiden Lötverbindungen mindestens 10%, insbesondere mindestens 20%, bevorzugt mindestens 30%, besonders bevorzugt mindestens 40% größer sein als der Durchmesser der kleineren der beiden Lötverbindungen.

In weiterer Ausgestaltung dieser Ausführungsform kann der hintere Endabschnitt des Spannelements abgestuft ausgebildet sein und die beiden Lötverbindungen im hinteren Endabschnitt auf zwei benachbarten Stufen ausgebildet sein. Somit kann das Spannelement mit seinem hinteren Endabschnitt in den Grundkörper eingesetzt sein.

Die vorstehenden Ausführungen zu Lötverbindungen können gleichermaßen für andere stoffschlüssige Fügebindungen gelten, beispielsweise für Klebeverbindungen, oder für Schweißverbindungen, insbesondere Reibschweißverbindungen.

Angrenzend an jede Lötverbindung kann im Grundkörper oder im Spannelement eine Ringnut ausgebildet sein, in der Lötmaterial, insbesondere CU-Lötmaterial, untergebracht ist. Eine solche Anordnung ermöglicht ein besonders einfaches Fügen der beiden Komponenten miteinander. Denn vor dem Ein- oder Aufsetzen des Spannelements auf bzw. in den Grundkörper kann in die entsprechenden Ringnuten Lötmaterial eingesetzt werden. Nach dem Einsetzen bzw. Aufsetzen kann dann die komplette Dehnspanneinrichtung in einem Ofen platziert werden und erhitzt werden, bis das Lötmaterial in den Ringnuten schmilzt. Da das Lötmaterial in unmittelbarer Nähe der zu erstellenden Lötverbindungen angeordnet ist, wird es durch die Kapillarwirkung in den Spalt zwischen der inneren Lötfläche und der äußeren Lötfläche gezogen. Die Menge des bereitgestellten Lötmaterials ist dabei so gewählt, dass die Lötflächen bevorzugt über ihre gesamte Länge benetzt werden, so dass sich die Lötverbindung über deren gesamte Länge erstreckt. Auf diese Weise wird gleichzeitig eine abdichtende Wirkung erzielt.

Die erfindungsgemäße Dehnspanneinrichtung kann als Spannfutter ausgebildet sein, wobei das Spannelement eine nach vorne offene Aufnahme für ein Bauteil mit einer radial nach innen weisenden Spannfläche aufweist. Die nach innen weisende Spannfläche kann dabei durch die Wandung einer nach vorne offenen Aufnahmebohrung gebildet werden. Alternativ kann die Dehnspanneinrichtung als Spanndorn ausgebildet sein, wobei das Spannelement eine Aufnahme mit einer radial nach außen weisenden Spannfläche aufweist. In diesem Fall besitzt das zu spannende Werkstück oder Werkzeug eine zentrale Bohrung, über welche es auf den Spanndorn aufgeschoben werden kann.

Um eine Spannwirkung zu erzielen, kann gemäß einer bevorzugten Ausführungsform das Spannelement eine mit einem Hydraulikmittel beaufschlagbare Druckkammeranordnung aufweisen, wobei zwischen der Spannfläche und der Druckkammeranordnung eine dünne Wandung derart ausgebildet ist, dass sie durch Erhöhung des Drucks in der Druckkammer elastisch verformbar ist, um ein in die Aufnahme eingesetztes oder auf die Aufnahme aufgeschobenes Bauteil kraftschlüssig zu fixieren. Mit anderen Worten ist in diesem Fall das Spannelement massiv ausgebildet, so dass die Druckkammeranordnung vollständig innerhalb des Spannelements ausgebildet ist. Anders ausgedrückt wird die Druckkammeranordnung vollständig radial nach außen und nach innen durch das Spannelement begrenzt. Dementsprechend bildet das Spannelement bevorzugt einen vorderen Endabschnitt der Dehnspanneinrichtung und ragt insbesondere nach vorne über den Grundkörper hinaus. Die Außenkontur des Spannelements und die angrenzende Außenkontur des Grundkörpers können so gewählt sein, dass sich außen ein stetiger Übergang zwischen Grundkörper und Spannelement, insbesondere eine durchgängige konische oder kreiszylindrische Kontur ergibt.

Wenn die Dehnspanneinrichtung als Spannfutter ausgebildet ist, so besitzt die nach vorne offene Aufnahmebohrung einen Durchmesser, der geringfügig größer ist als der Durchmesser eines zu spannenden Bauteils, beispielsweise eines Werkzeugschafts. Dadurch kann das Bauteil mit Spiel in die Aufnahme eingesetzt werden. Durch eine Erhöhung des Drucks in der Druckkammeranordnung wird die dünne Wandung elastisch radial nach innen verformt, so dass diese das in die Aufnahme eingesetzte Bauteil kraftschlüssig fixiert. Umgekehrt ist bei einem Spannfutter die Bohrung, mit der das zu fixierende Bauteil auf den Spanndorn aufgeschoben wird, geringfügig größer als der Außendurchmesser der Spannfläche. Durch eine Erhöhung des Drucks in der Drucckammeranordnung wird die dünne Wandung und damit auch die nach außen weisende Spannfläche radial nach außen verformt, so dass das Bauteil von innen kraftschlüssig fixiert wird.

In weiterer Ausgestaltung kann zumindest eine der beiden Lötverbindungen axial hinter der Druckkammeranordnung liegen.

Prinzipiell kann die Druckkammeranordnung eine ringförmig umlaufende Druckkammer oder über den Umfang verteilt mehrere, insbesondere genau drei, fluidisch miteinander verbundene Druckkammerabschnitte umfassen. Um den Druck in der Druckkammeranordnung zu verändern, kann die Drucckammeranordnung in einen Hydraulikmittelzuführkanal münden, der an seiner von der Druckkammer fernen Seite durch Spannmittel verschlossen ist. Konkret können die Spannmittel eine Spannschraube umfassen, die mit einem im Hydraulikmittelzuführkanal verschiebbar angeordneten Spannkolben verbunden oder einteilig mit diesem ausgebildet ist, so dass der Spannkolben durch Drehen der Spannschraube unter Erhöhung des Drucks in der Druckkammer verschiebbar ist.

In konkreter Ausgestaltung kann der Hydraulikmittelzuführkanal angrenzend an die Druckkammeranordnung einen spannelementseitigen Kanalabschnitt, der sich ausgehend von der Druckkammeranordnung in das Spannelement erstreckt und in einem zwischen dem Spannelement und dem Grundkörper ausgebildeten Zwischenraum mündet, und einen grundkörperseitigen Kanalabschnitt aufweisen, der sich ausgehend von dem Zwischenraum in dem Grundkörper in Richtung der Spannschraube erstreckt. Dieser Ausgestaltung liegt die Überlegung zugrunde, dass die Druckkammeranordnung fluidisch mit den Spannmitteln verbunden sein muss. Da die Druckkammeranordnung in dem Spannelement enthalten ist, wird zunächst eine fluidische Verbindung zu einem Zwischenraum zwischen Spannelement und Grundkörper realisiert und, ausgehend von dem Zwischenraum, eine fluidische Verbindung innerhalb des Grundkörpers zu den Spannmitteln.

In konkreter Ausgestaltung können der spannelementseitige Kanalabschnitt und/oder der grundkörperseitige Kanalabschnitt durch sich in Längsrichtung erstreckende Bohrungen gebildet sein. Solche Bohrungen können auf einfache Weise bei der Herstellung des Grundkörpers und des Spannelements erzeugt werden. Im Spannelement ausgebildete Bohrungen können während der generativen Fertigung vorgesehen werden oder im Anschluss an die generative Erzeugung des Spannelements zerspanend eingebracht werden.

In weiterer Ausgestaltung kann der Zwischenraum radial und/oder axial zwischen den beiden Lötverbindungen ausgebildet sein. Mit anderen Worten kann der Zwischenraum zu beiden Seiten hin, d.h. radial nach innen bzw. nach außen, und axial, d.h. nach vorne und nach hinten, durch die beiden Lötverbindungen begrenzt sein. Da die beiden Lötverbindungen unterschiedliche Durchmesser haben, ist so genügend Raum vorhanden, so dass der spannelementseitige Kanalabschnitt bzw. der grundkörperseitige Kanalabschnitt jeweils in den Zwischenraum münden können. Bevorzugt ist der Zwischenraum ringförmig umlaufend zwischen den Grundkörper und dem Spannelement ausgebildet.

Der Grundkörper kann in seinem rückseitigen Endbereich eine Maschinenschnittstelle zum Anbringen an der Spindel einer Werkzeugmaschine aufweisen. Der Grundkörper kann auch einen Greiferflansch aufweisen, wobei das Spannelement bevorzugt in einem axial vor dem Greiferflansch, gegenüber dem Greiferflansch verjüngten Bereich der Dehnspanneinrichtung angeordnet ist.

Hinsichtlich weiterer vorteilhafter Ausgestaltungen wird auf die Unteransprüche sowie die nachfolgende Beschreibung von Ausführungsbeispielen unter Bezugnahme auf die beiliegende Zeichnung verweisen. In der Zeichnung zeigen:
- Figur 1: eine erste Ausführungsform einer erfindungsgemäßen Dehnspanneinrichtung in einer teilweise geschnittenen Seitenansicht;
- Figur 2: den vorderen Endbereich der Dehnspanneinrichtung aus Figur 1 in einer Längsschnittansicht;
- Figur 3: den Grundkörper der Dehnspanneinrichtung aus Figur 1 in einer teilweise geschnittenen Seitenansicht;
- Figur 4: das Spannelement der Dehnspanneinrichtung aus Figur 1 in einer Längsschnittansicht;
- Figur 5: eine zweite Ausführungsform einer erfindungsgemäßen Dehnspanneinrichtung in einer teilweise geschnittenen Seitenansicht;
- Figur 6: den vorderen Endbereich der Dehnspanneinrichtung aus Figur 5 in einer Längsschnittansicht;
- Figur 7: den Grundkörper der Dehnspanneinrichtung aus Figur 5 in einer teilweise geschnittenen Seitenansicht; und
- Figur 8: das Spannelement der Dehnspanneinrichtung aus Figur 5 in einer Längsschnittansicht.

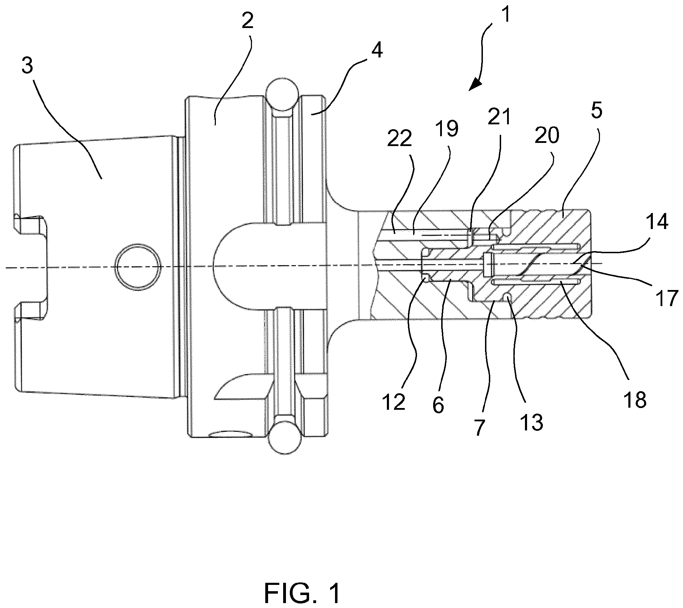

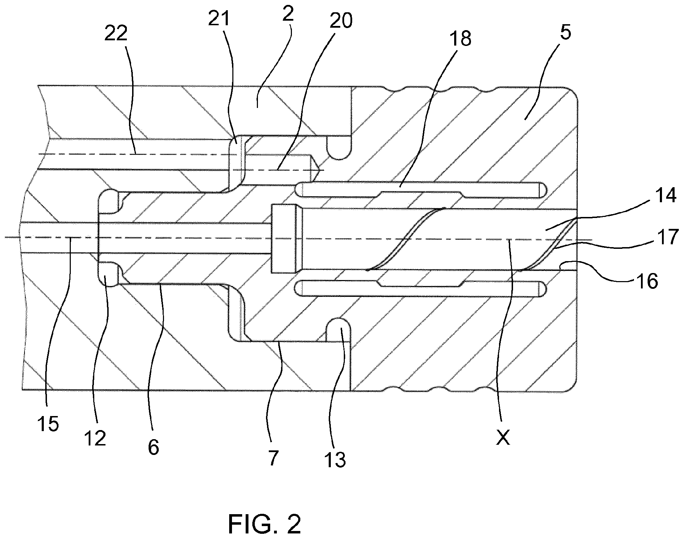

Die Figuren 1 und 2 zeigen eine als Spannfutter ausgebildete Dehnspanneinrichtung 1 gemäß der vorliegenden Erfindung. Die Dehnspanneinrichtung 1 besitzt einen Grundkörper 2, der eine Längsachse X definiert und an seinem rückseitigen Endbereich eine als Hohschaftkegel (HSK) ausgebildete Maschinenschnittstelle 3 aufweist. Axial vor der Maschinenschnittstelle 3 ist ein Greiferflansch 4 angeordnet, wobei der axial vor dem Greiferflansch 4 liegende Bereich gegenüber diesem verjüngt ausgebildet ist und im Wesentlichen eine kreiszylindrische Außenkontur aufweist.

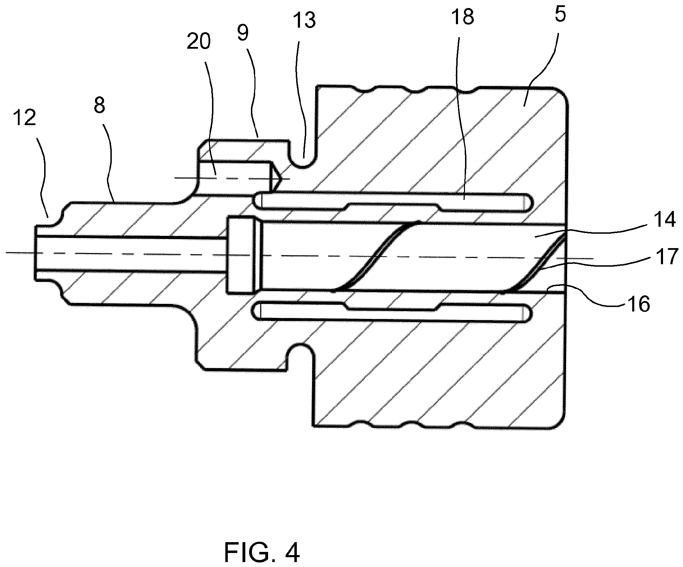

Von vorne ist ein Spannelement 5, welches unabhängig vom Grundkörper 2 mittels selektiven Laserschmelzens generativ gefertigt wurde und im Detail in der Figur 4 dargestellt ist, in den Grundkörper 2 eingesetzt und über zwei Lötverbindungen 6, 7 mit dem Grundkörper 2 stoffschlüssig verbunden. Konkret ist der hintere axiale Endabschnitt des Spannelements 5 abgestuft ausgebildet, wobei auf zwei benachbarten Stufen jeweils eine innere, nach außen weisende Lötfläche 8, 9 der beiden Lötverbindungen 6, 7 ausgebildet ist.

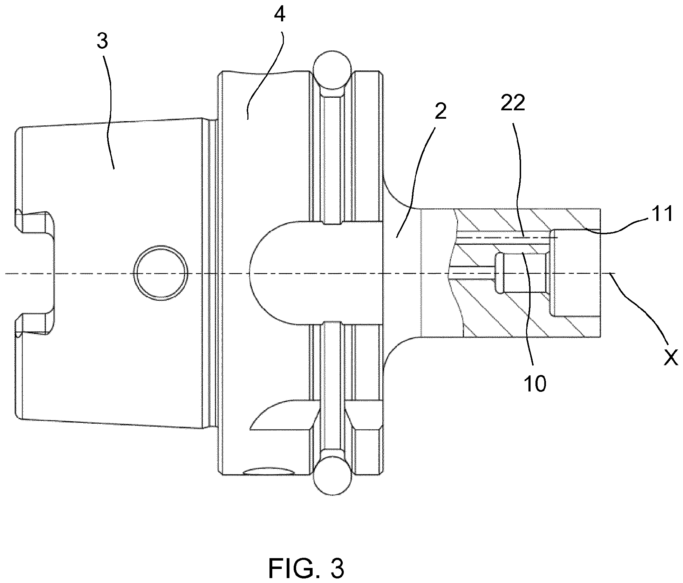

Wie der Figur 3 zu entnehmen ist, besitzt der Grundkörper 2 dazu korrespondierende nach innen weisende äußere Lötflächen 10, 11. Die beiden inneren Lötflächen 8, 9 und die beiden äußeren Lötflächen 10, 11 sind vorliegend als ringförmig umlaufende, kreiszylindrische Flächen ausgebildet.

Die beiden Lötverbindungen 6, 7 befinden sich somit auf unterschiedlichen Durchmessern um die Längsachse X. Der Durchmesser der größeren, vorderen Lötverbindung 7 ist in etwa doppelt so groß wie der Durchmesser der hinteren, kleineren Lötverbindung 6.

Zur Herstellung der Lötverbindungen 6, 7 ist hinter der hinteren Lötverbindung 6 im Spannelement eine nach hinten offene Ringnut 12 ausgebildet. Ferner ist im Spannelement 5 axial vor der vorderen Lötverbindung 7 eine Ringnut 13 ausgebildet. In die beiden Ringnuten 12, 13 ist Lötmaterial, welches in den Figuren nicht dargestellt ist, eingesetzt, so dass zum Erzeugen der stoffschlüssigen Verbindung der zuvor konventionell, d.h. durch zerspanende Fertigungsverfahren hergestellte Grundkörper 2 und das generativ erzeugte und in den Grundkörper 2 eingesetzte Spannelement 5 in einem Ofen platziert und aufgewärmt werden, bis das Lötmaterial schmilzt. Dabei zieht sich das Lötmaterial durch die Kapillarwirkung in den Spalt zwischen den äußeren Lötflächen 8, 9 und den korrespondierenden inneren Lötflächen 10, 11, so dass jeweils eine stoffschlüssige Lötverbindung 6, 7 entsteht.

Zur Aufnahme eines Werkzeugschafts ist in dem Spannelement eine nach vorne offene Aufnahmebohrung 14 ausgebildet. In diese mündet von hinten eine axiale Durchgangsbohrung 15, die den gesamten Grundkörper 2 axial durchsetzt, um Kühlmittel von hinten in einem in die Aufnahmebohrung 14 eingesetzten Werkzeug zuführen zu können. Die Aufnahmebohrung 14 besitzt eine radial nach innen weisende Spannfläche 16, in der eine wendelförmige, als Schmutzrille dienende Nut 17 ausgebildet ist. Der Durchmesser der Aufnahmebohrung 14 ist dabei geringfügig größer als der Durchmesser eines zu spannenden Werkzeugschafts.

Das Spannelement 5 weist eine mit einem Hydraulikmittel beaufschlagbare Druckkammeranordnung 18 auf, welche eine ringförmig umlaufende Drucckammer umfasst. Zwischen der Spannfläche 16 und der Druckkammeranordnung 18 ist eine dünne Wandung derart ausgebildet, dass sie durch eine Erhöhung des Drucks in der Druckkammeranordnung 18 elastisch radial nach innen verformbar ist, um ein in die Aufnahmebohrung 14 eingesetztes Bauteil kraftschlüssig zu fixieren.

Die Druckkammeranordnung 18 mündet in einen Hydraulikmittelzuführkanal 19. Angrenzend an die Druckkammeranordnung 18 besitzt der Hydraulikmittelzuführkanal 19 einen spannelementseitigen Kanalabschnitt 20, der in einen zwischen dem Spannelement 5 und dem Grundkörper 2 ausgebildeten Zwischenraum 21 mündet. Dieser Zwischenraum 21 ist radial und axial zwischen den beiden Lötverbindungen 6, 7 ausgebildet und verläuft ringförmig umlaufend zwischen dem Grundkörper 2 und dem Spannelement 5. An den Zwischenraum 21 schließt sich ein grundkörperseitiger Kanalabschnitt 22 an, der sich ausgehend von dem Zwischenraum 21 in den Grundkörper 2 erstreckt. Sowohl der spannelementseitige Kanalabschnitt 20, als auch der an den Zwischenraum 21 angrenzende grundkörperseitige Kanalabschnitt 22 werden durch sich in Längsrichtung erstreckende Bohrungen gebildet.

An seiner von der Druckkammeranordnung 18 fernen Seite ist der Hydraulikmittelzuführkanal 19 durch Spannmittel verschlossen. Diese sind in den Figuren 1 bis 4 nicht im Detail dargestellt, umfassen jedoch eine Spannschraube, die mit einem im Hydraulikmittelzuführkanal 19 verschiebbar angeordneten Spannkolben verbunden oder einteilig mit diesem ausgebildet ist, so dass der Spannkolben durch Drehen der Spannschraube unter Erhöhung des Drucks in der Druckkammeranordnung 18 verschiebbar ist.

Durch die beiden Lötverbindungen 6, 7 wird der Zwischenraum 21 zuverlässig nach außen abgedichtet, so dass kein Hydraulikmittel aus dem Hydraulikmittelzuführkanal 19 und der Druckkammeranordnung 18 nach außen entweichen kann.

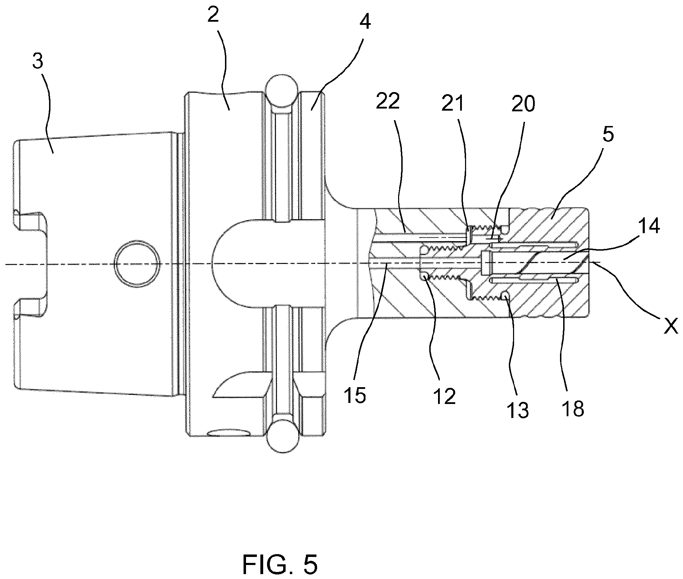

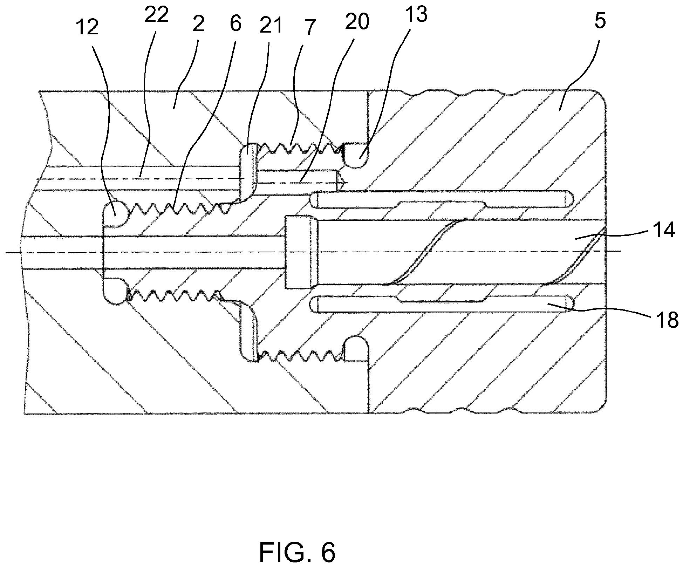

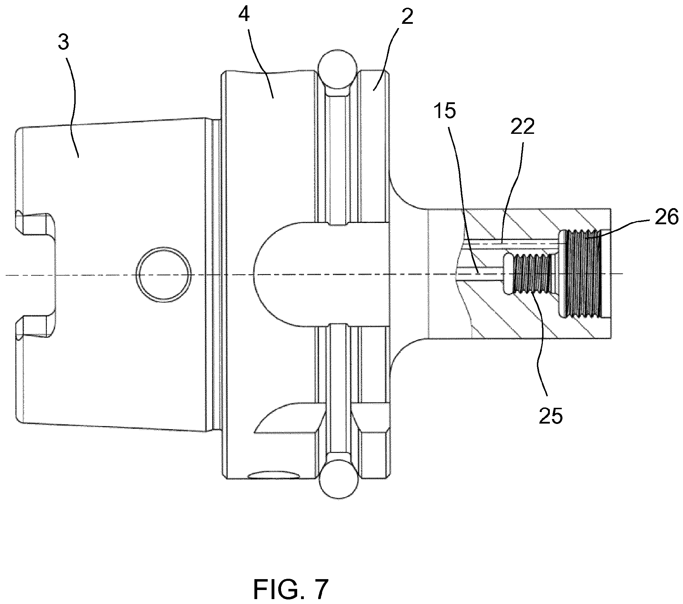

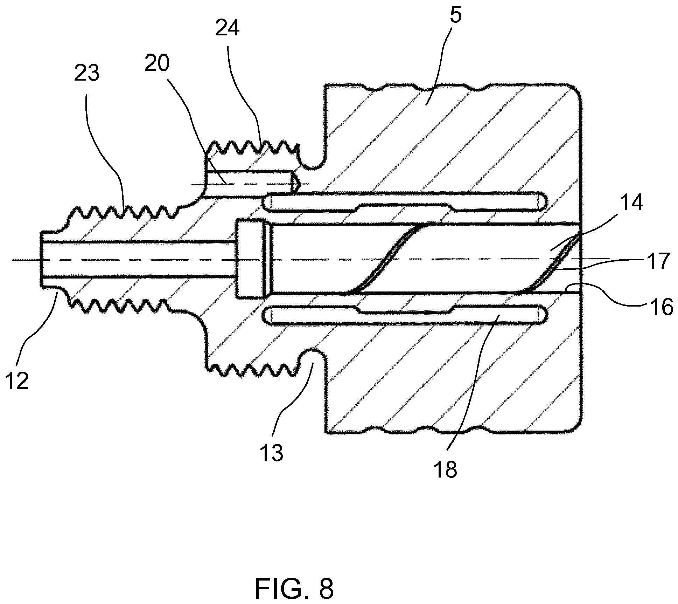

Die Figuren 5 bis 8 zeigen eine ebenfalls als Spannfutter ausgebildete Dehnspanneinrichtung 1 gemäß der vorliegenden Erfindung. Diese ist weitestgehend identisch mit der in den Figuren 1 und 2 dargestellten Dehnspanneinrichtung 1. Allerdings sind vorliegend die inneren und äußeren Lötflächen 8, 9, 10, 11 nicht als kreiszylindrische Flächen ausgebildet, sondern werden durch zwei am Spannelement ausgebildete Außengewinde 23, 24 und dazu korrespondierende, am Grundkörper ausgebildete Innengewinde 25, 26 gebildet. Mit anderen Worten besteht zwischen dem Spannelement 5 und dem Grundkörper 2 nicht nur eine stoffschlüssige Verbindung über die Lötverbindungen 6, 7, sondern gleichzeitig ein formschlüssiger Eingriff durch die im Bereich der Lötverbindung 6, 7 ausgebildeten Gewindeverbindungen.

In diesem Fall ist das Spannelement 5 zunächst generativ gefertigt worden, bevor anschließend die beiden Außengewinde 23, 24 in einem weiteren Fertigungsschritt hergestellt wurden. Die Außengewinde 23, 24 bzw. die Innengewinde 25, 26 sind vorliegend als metrische Feingewinde nach DIN 13-2:1999-11 ausgebildet und besitzen eine zylindrische Grundform. Die Gewindeanfänge sind derart aufeinander abgestimmt, dass beide Außengewinde 23, 24 gleichzeitig in die beiden Innengewinde 25, 26 des Grundkörpers 2 eingeschraubt werden können.

Bei den beiden Ausführungsformen ist gemeinsam, dass nach dem Einsetzen des Spannelements 5 in den Grundkörper 2 die beiden Komponenten in einem Ofen platziert werden und erwärmt werden, so dass das in die Ringnuten 12, 13 eingesetzte Lötmaterial schmilzt und sich durch die Kapillarwirkung in die beiden Lötspalte zwischen dem Grundkörper 2 und dem Spannelement 5 zieht. Bei der ersten Ausführungsform wird dadurch eine zylindrische, rein stoffschlüssige Verbindung zwischen dem Spannelement 5 und dem Grundkörper 2 erzeugt. Bei der zweiten Ausführungsform hingegen zieht sich das Lötmaterial in dem Spalt zwischen dem jeweiligen Außengewinde 23, 24 und dem jeweils dazu korrespondierenden Innengewinde 25, 26, so dass zusätzlich zu dem formschlüssigen Eingriff der Gewinde ineinander noch eine stoffschlüssige Verbindung entsteht.

Die erfindungsgemäßen Dehnspanneinrichtungen 1 können dadurch auf effiziente Weise gefertigt werden, da lediglich das Spannelement 5, welches den vorderen axialen Endbereich der Dehnspanneinrichtung 1 bildet, generativ unabhängig vom Grundkörper 2 gefertigt werden kann.

### Bezugszeichenliste

- 1: Dehnspanneinrichtung
- 2: Grundkörper
- 3: Maschinenschnittstelle
- 4: Greiferflansch
- 5: Spannelement
- 6: Lötverbindung
- 7: Lötverbindung
- 8: innere Lötfläche
- 9: innere Lötfläche
- 10: äußere Lötfläche
- 11: äußere Lötfläche
- 12: Ringnut
- 13: Ringnut
- 14: Aufnahmebohrung
- 15: axiale Durchgangsbohrung
- 16: Spannfläche
- 17: wendelförmige Nut
- 18: Druckkammeranordnung
- 19: Hydraulikmittelzuführkanal
- 20: spannelementseitiger Kanalabschnitt
- 21: Zwischenraum
- 22: grundkörperseitiger Kanalabschnitt
- 23: Außengewinde
- 24: Außengewinde
- 25: Innengewinde
- 26: Innengewinde
- X: Längsachse

## Patentansprüche

1. Dehnspanneinrichtung (1) zum Fixieren eines Bauteils, insbesondere eines Werkstücks oder eines Werkzeugs, mit
einem eine Längsachse (X) definierenden Grundkörper (2) und
einem Spannelement (5), welches eine Aufnahme mit einer nach innen weisenden oder einer nach außen weisenden Spannfläche (16) zum kraftschlüssigen Spannen des Bauteils aufweist,
**dadurch gekennzeichnet, dass** das Spannelement (5) mittels eines generativen Fertigungsverfahrens, insbesondere mittels selektiven Laserschmelzens, gefertigt ist und mit dem Grundkörper (2) durch mindestens eine stoffschlüssige Fügeverbindung, insbesondere durch mindestens eine Lötverbindung (6, 7), bevorzugt durch mindestens eine Hochtemperatur-Lötverbindung, oder durch mindestens eine Schweißverbindung, insbesondere durch mindestens eine Reibschweißverbindung, oder durch mindestens eine Klebeverbindung verbunden ist, wobei, bevorzugt, das Spannelement (5) mit dem Grundkörper (2) durch zwei axial versetzt zueinander angeordnete Fugenverbindungen verbunden ist und die beiden Fugenverbindungen im hinteren Endabschnitt auf zwei benachbarten Stufen ausgebildet sind.

2. Dehnspanneinrichtung (1) nach Anspruch 1, **dadurch gekennzeichnet, dass** das Spannelement (5) einen vorderen axialen Endbereich der Dehnspanneinrichtung (1) bildet und/oder von vorne auf den Grundkörper (2) aufgesetzt oder in diesen eingesetzt ist.

3. Dehnspanneinrichtung (1) nach Anspruch 1 oder Anspruch 2, **dadurch gekennzeichnet, dass** die stoffschlüssige Fügeverbindung des Spannelements (5) mit dem Grundkörper (2) zwei axial versetzt zueinander angeordnete Lötverbindungen (6, 7) umfasst.

4. Dehnspanneinrichtung (1) nach Anspruch 3, **dadurch gekennzeichnet, dass** jede Lötverbindung (6, 7) eine am Spannelement (5) oder am Grundkörper (2) ausgebildete, nach außen weisende äußere Lötfläche (10, 11) und eine an dem anderen der beiden Teile ausgebildete, nach innen weisenden Lötfläche (8, 9) umfasst, wobei die äußere und die innere Lötfläche (8, 9, 10, 11) ringförmig umlaufend derart ausgebildet sind, dass zwischen der äußeren und der inneren Lötfläche (8, 9, 10, 11) ein ringförmig umlaufender Lötspalt existiert, wobei bevorzugt jede Lötverbindung (6, 7) eine am Spannelement (5) ausgebildete, nach außen weisende Lötfläche (10, 11) aufweist und eine korrespondierende, am Grundkörper (2) ausgebildete nach innen weisende Lötfläche (8, 9) aufweist, so dass der Grundkörper (2) das Spannelement (5) im Bereich der Lötverbindungen (8, 9, 10, 11) von außen umgibt.

5. Dehnspanneinrichtung (1) nach Anspruch 4, **dadurch gekennzeichnet, dass** die Lötflächen (8, 9, 10, 11) eine kreiszylindrische Form aufweisen, oder dass die beiden Lötflächen (8, 9, 10, 11) der Lötverbindung (6, 7) durch ein Innen- und ein Außengewinde (23, 24, 25, 26) gebildet werden, so dass die Lötverbindung (6, 7) zwischen dem Außengewinde (23, 24) und dem Innengewinde (25, 26) ausgebildet ist.

6. Dehnspanneinrichtung (1) nach Anspruche4 oder 5, **dadurch gekennzeichnet, dass** die beiden Lötverbindungen (6, 7) auf unterschiedlichen Durchmessern um die Längsachse (X) angeordnet sind, wobei, bevorzugt, der Durchmesser der größeren der beiden Lötverbindungen (6, 7) mindestens 10%, insbesondere mindestens 20%, bevorzugt mindestens 30%, besonders bevorzugt mindestens 40% größer ist als der Durchmesser der kleineren der beiden Lötverbindungen (6, 7).

7. Dehnspanneinrichtung (1) nach einem der Ansprüche 3 bis 6, **dadurch gekennzeichnet, dass** der hintere Endabschnitt des Spannelements (5) abgestuft ausgebildet ist und die beiden Lötverbindungen (6, 7) im hinteren Endabschnitt auf zwei benachbarten Stufen ausgebildet sind, und/oder dass angrenzend an jede Lötverbindung (6, 7) im Grundkörper (2) oder im Spannelement (5) eine Ringnut (12, 13) ausgebildet ist, in der Lötmaterial, insbesondere CU-Lötmaterial, untergebracht ist.

8. Dehnspanneinrichtung (1) nach einem der vorherigen Ansprüche, **dadurch gekennzeichnet, dass** diese als Spannfutter ausgebildet ist und das Spannelement (5) eine Aufnahme für ein Bauteil mit einer nach innen weisenden Spannfläche (16) aufweist, oder dass diese als Spanndorn ausgebildet ist und das Spannelement (5) eine Aufnahme mit einer nach außen weisenden Spannfläche (16) aufweist.

9. Dehnspanneinrichtung (1) nach einem der vorherigen Ansprüche, **dadurch gekennzeichnet, dass** das Spannelement (5) eine mit einem Hydraulikmittel beaufschlagbare Druckkammeranordnung (18) aufweist, wobei zwischen der Spannfläche (16) und der Druckkammeranordnung (18) eine dünne Wandung derart ausgebildet ist, dass sie durch Erhöhung des Drucks in der Druckkammer elastisch radial verformbar ist, um einen in die Aufnahme eingesetztes oder auf die Aufnahme aufgeschobenes Bauteil kraftschlüssig zu fixieren.

10. Dehnspanneinrichtung (1) nach Anspruch 9 und einem der Ansprüche 3 bis 6, **dadurch gekennzeichnet, dass** zumindest eine der beiden Lötverbindungen (6, 7) axial hinter der Druckkammeranordnung (18) liegt.

11. Dehnspanneinrichtung (1) nach einem der Ansprüche 9 oder 10, **dadurch gekennzeichnet, dass** die Druckkammeranordnung (18) eine ringförmig umlaufende Druckkammer oder über den Umfang verteilt mehrere, insbesondere genau drei, fluidisch miteinander verbundene Druckkammerabschnitte umfasst.

12. Dehnspanneinrichtung (1) nach einem der Ansprüche 8 bis 11, **dadurch gekennzeichnet, dass** diese als Spanndorn ausgebildet ist und die Druckkammeranordnung (18) in einen Hydraulikmittelzuführkanal (19) mündet, der an seiner von der Druckkammer fernen Seite durch Spannmittel verschlossen ist, wobei, insbesondere, die Spannmittel eine Spannschraube umfassen, die mit einem im Hydraulikmittelzuführkanal (19) verschiebbar angeordneten Spannkolben verbunden oder einteilig mit diesem ausgebildet ist, so dass der Spannkolben durch Drehen der Spannschraube unter Erhöhung des Drucks in der Druckkammer verschiebbar ist.

13. Dehnspanneinrichtung (1) nach Anspruch 12, **dadurch gekennzeichnet, dass** der Hydraulikmittelzuführkanal (19) angrenzend an die Druckkammeranordnung (18) einen spannelementseitigen Kanalabschnitt (20), der sich ausgehend von der Druckkammeranordnung (18) in das Spannelement (5) erstreckt und in einen zwischen dem Spannelement (5) und dem Grundkörper (2) ausgebildeten Zwischenraum (21) mündet, und einen grundkörperseitigen Kanalabschnitt (22) aufweist, der sich ausgehend von dem Zwischenraum (21) in den Grundkörper (2) in Richtung der Spannschraube erstreckt.

14. Dehnspanneinrichtung (1) nach Anspruch 13, **dadurch gekennzeichnet, dass** der spannelementseitige Kanalabschnitt (20) und/oder der grundkörperseitige Kanalabschnitt (22) durch sich in Längsrichtung erstreckende Bohrungen gebildet sind, und/oder dass der Zwischenraum (21) radial und/oder axial zwischen den beiden Lötverbindungen (6, 7) ausgebildet ist, und/oder dass der Zwischenraum (20) ringförmig umlaufend zwischen dem Grundkörper (2) und dem Spannelement (5) ausgebildet ist.

15. Verfahren zur Herstellung einer Dehnspanneinrichtung (1) nach einem der vorherigen Ansprüche, umfassend die folgenden Schritte:
- Bereitstellen eines Grundkörpers (2), welcher eine Längsachse (X) definiert;
- Generatives Erzeugen eines Spannelements (5), insbesondere mittels eines direkten oder eines indirekten additiven Fertigungsverfahrens, bevorzugt mittels selektiven Laserschmelzens, wobei insbesondere der hintere Endabschnitt des Spannelements (6) abgestuft ausgebildet ist;
- Aufsetzen des Spannelements (5) auf den Grundkörper (2) von vorne oder Einsetzen des Spannelements (5) in den Grundkörper (2) von vorne;
- stoffschlüssiges Fügen des Spannelements (5) mit dem Grundkörper (2), insbesondere durch Löten, bevorzugt durch Hochtemperatur- Löten, oder durch Schweißen, insbesondere durch Reibschweißen, oder durch Kleben, wobei - insbesondere - zwei axial versetzt zueinander angeordnete stoffschlüssige Fugenverbindungen entstehen, die im hinteren Endabschnitt des Spannelements (5) auf zwei benachbarten Stufen ausgebildet sind.
